# EUROPEAN PATENT APPLICATION

(11) **EP 4 446 606 A1**
(43) Date of publication of application: **16.10.2024**
(21) Application number: 22903645.4
(22) Date of filing: 07.12.2022
(51) Int. Cl.: F16C 33/58

(54) **HIGH-PERFORMANCE ROLLING BEARING HAVING CONICAL, CYLINDRICAL OR SPHERICAL ROLLERS**

(30) Priority: 10.12.2021 ES 202132426 U
(71) Applicant: Fersa Bearings S.A., 50197 Zaragoza (ES)
(72) Inventor: MIGUEL MARTIN, Ignacio, 50197 ZARAGOZA (ES); CARBONELL NAVARRO, Alejandro, 50197 ZARAGOZA (ES); MALLO APARICIO, Carlos, 50197 ZARAGOZA (ES); SANTO DOMINGO, Sergio, 50197 ZARAGOZA (ES)
(74) Representative: Schäfer, Matthias W.
(86) International application number: PCT/ES2022/070782
(87) International publication number: WO 2023/105106

(57) **Abstract**

The invention focuses on the contact surfaces between the inner ring raceway, the outer ring raceway and the rolling elements which are conical rollers, cylindrical rollers or spherical rolling elements. These contact surfaces combine reduced roughness and a profile with a new micro-geometry to optimise contact and reduce friction.

## Description

The present descriptive report refers to a set of improved features in the microgeometry and surface quality of the outer ring race, inner ring and rolling elements of a tapered, cylindrical or spherical roller bearing, which improve performance by reducing friction.

### Background of the invention

Bearing manufacturers are constantly innovating and developing new features that affect the bearing surface in order to improve bearing performance by reducing friction and sometimes sacrificing load carrying capacity. Both features are very difficult to combine and in most cases it is not possible and one is sacrificed for the other.

WO2005080813 refers to a tapered roller bearing in which the inner race and outer race have a convexity on their contact surface with the tapered roller called pumped. This reduces the friction of the inner ring and outer ring with the tapered roller, although it is not clear that it maintains its load carrying capacity.

Document KR20160082827 describes a tapered roller bearing designed to reduce friction in which the inner ring raceway and outer ring raceway have a plurality of friction-reducing holes.

In this new invention, bearing efficiency is improved by applying a new geometry and surface quality to the profile of the rolling contact surfaces between the inner ring raceway, the outer ring raceway and the rolling elements. These geometry variations not only improve efficiency, but also do not reduce the load carrying capacity of the bearings.

### Description of the invention

A bearing consists of four main parts, namely inner ring, rolling elements, cage and outer ring. The invention described below focuses on the contact surfaces between the inner ring raceway, the outer ring raceway and the rolling elements which in this type of bearing are tapered rollers, cylindrical rollers or spherical rolling elements. It also focuses on the sliding contact that may exist between the heads of the rolling elements and the flange of the inner ring, if any. We describe below the innovations applied to each of the bearing parts mentioned in this paragraph.

The contact surface between the inner ring and the rolling elements is called the inner raceway and a new micro-geometry is applied to the surface of the inner raceway. The profile becomes much less rough and has a logarithmic shape, which is defined as an elevation of the plane on the contact surface, specially designed to optimise the contacts and reduce the friction generated. A mixed logarithmic geometry can also be applied, which means a slight bulging of the raised flat surface of the logarithmic profile.

On the other hand, the contact surface with the heads of the rolling elements, located on the vertical wall of the inner ring flange, is called the sliding track and also has an optimised micro-geometry selected between a straight or quasi-pumped profile and reduced roughness.

The outer ring also has, on its inner face, a track called the outer raceway, whose profile is also given a new micro-geometry. This new geometry consists of a new pumped profile defined as a special pumping with a greater shaft height than the pumping defined in a standard pumping used until now and a reduced roughness, specially designed to optimise the contacts and reduce their friction.

The rolling elements, which as mentioned in previous paragraphs, can be of the conical, cylindrical, or spherical type, also have microgeometric variations applied to their surface or raceway. In this raceway, the profile may be pumped or it may be a mixed logarithmic profile.

The cage is preferably made of a polyamide type polymer to reduce friction with the steel of the rolling elements, although it can also be made of steel.

All information referring to examples or modes of embodiment, form part of the description of the invention.

### Description of the figures

In order to better understand the object of the present invention, a preferential practical embodiment thereof has been represented in the attached drawing.
Figure 1. Shows a cut tapered roller bearing (5).
Figure 2. Shows the logarithmic profile (8).
Figure 3. Shows the special logarithmic profile (10).
Figure 4. Shows the standard pumped profile (12).
Figure 5. Shows the special pumped profile (13).

### Preferred embodiment of the invention

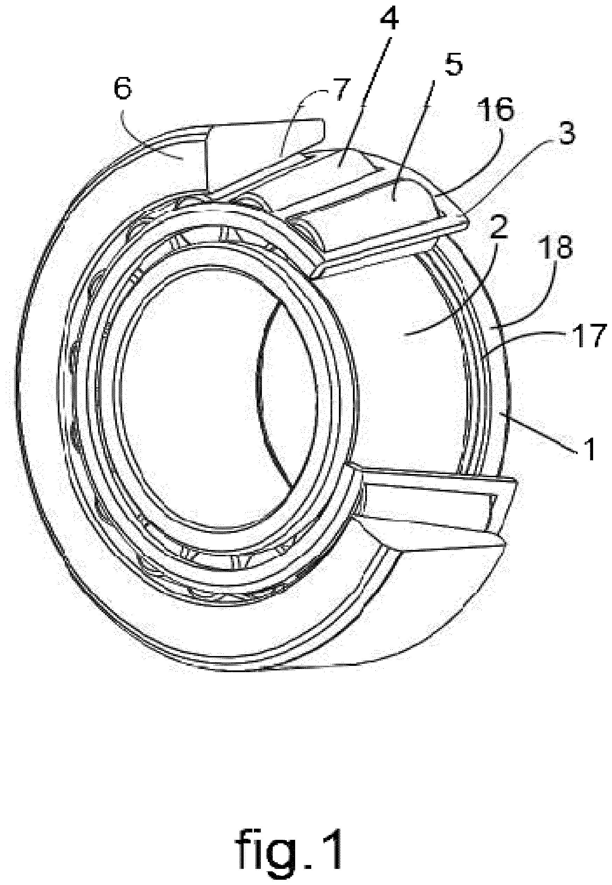

Figure 1 shows a bearing cut to explain each of the parts. The bearing consists of an inner ring (1). On its outer face is the inner raceway (2) which is the surface that comes into contact with the rolling element (4) which, in the case of conical, cylindrical or spherical rolling elements, has a defined raceway (5). In the inner ring (1), there may be a flange (18), the vertical wall of which has a sliding track (17) that may have flat or slightly convex micro-geometry and reduced roughness. This sliding surface (17) contacts the head (16) of the rolling elements. These rolling elements fit inside an intermediate spacer ring called a cage (3) which facilitates assembly, distributes the rolling elements evenly and prevents them from sliding or becoming dislodged. Finally, an outer ring (6) with its inner side acting as an outer raceway (7).

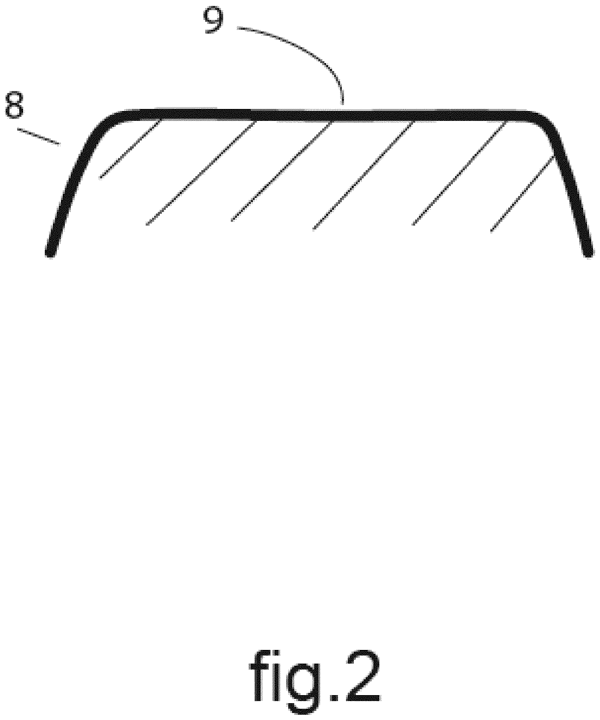

Figure 2 shows a logarithmic profile (8). The logarithmic profile (8) can be defined as an elevation of the running surface while maintaining the flat surface (9).

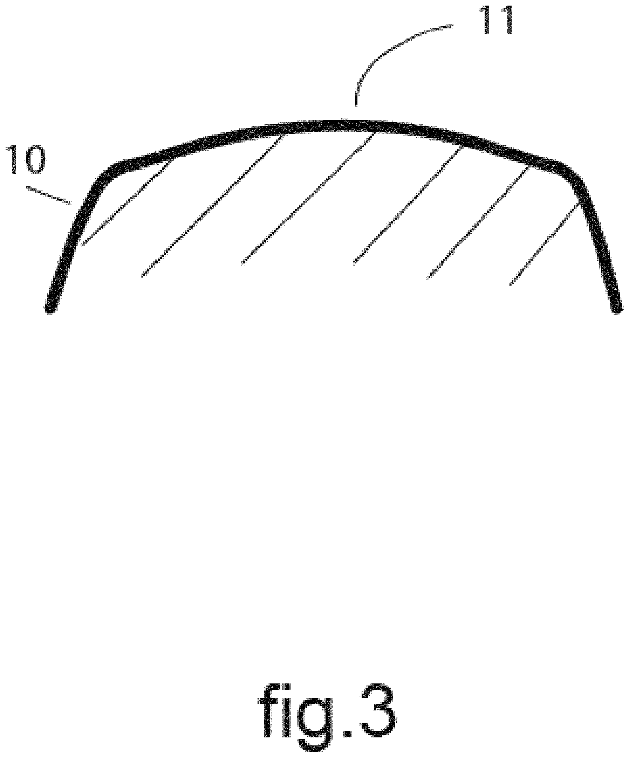

A mixed logarithmic profile (10) is shown in Figure 3. The mixed logarithmic profile (10) has the elevation, however, the surface has a slight pumping (11).

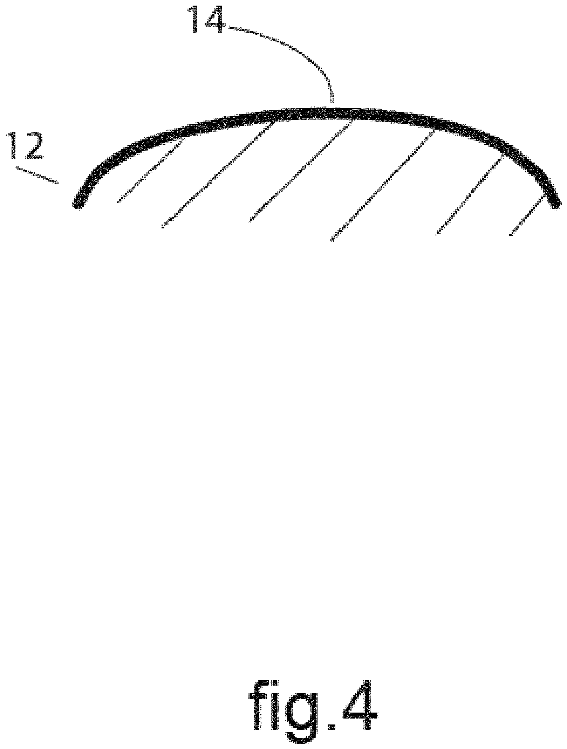

Figure 4 shows a profile with a standard pumping (12). The pumping (14) is softer or flattened.

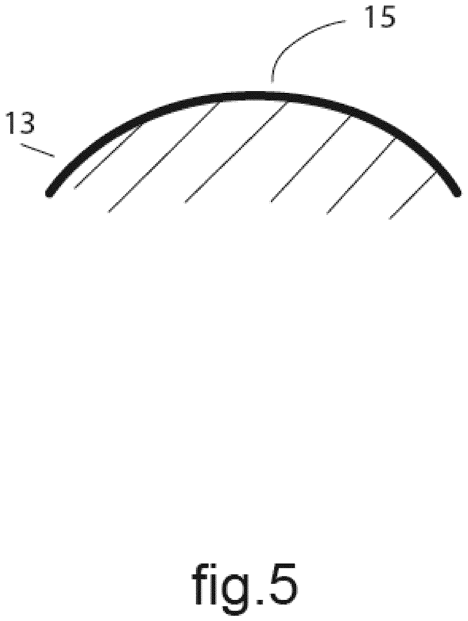

Figure 5 shows a profile with special pumping (13). The arrow (15) of the special pumping is slightly higher.

This combination of profiles and the variations applied to them allows the friction to be reduced without altering the load capacity.

Persons skilled in the art will easily understand that the characteristics of different embodiments can be combined with characteristics of other possible embodiments whenever such a combination is technically possible.

## Claims

1. - High efficiency tapered, cylindrical and spherical roller bearings, **characterised in that it** comprises:
- an inner raceway (2) of the inner ring (1), having a reduced roughness, and a profile selected from among
a logarithmic profile (8) having a raised plane
or a mixed logarithmic profile (9), having a raised profile with a slight pumped surface,
- a sliding track (18) between the inner ring (1) and the head (16) of the rolling elements, having a reduced roughness and a profile with a surface geometry selected between straight or slightly pumped,
- a head (16) of the rolling element (14) having reduced roughness
- a raceway (5) of the rolling element (4) with reduced roughness and a profile selected from a standard pumped profile (12) or a mixed logarithmic profile (9)
- an outer raceway (7) of the outer ring (6) with a special pumped profile (13), having a reduced roughness as well as a greater height or deflection (15) than the pumping (14) of the standard pumping (12),
- a cage (3) between the inner ring (1) and the outer ring (6)

2. - High efficiency tapered, cylindrical or spherical roller bearing, according to claim 1, **characterised in that** the cage (3) is made of a polymer material of the polyamide type.
